(19) Europäisches Patentamt
European Patent Office
Office européen des brevets

(11) EP 4 163 546 A1

(12) EUROPÄISCHE PATENTANMELDUNG

(43) Veröffentlichungstag:
12.04.2023 Patentblatt 2023/15

(51) Internationale Patentklassifikation (IPC):
F23D 14/22 (2006.01)      C01B 3/36 (2006.01)

(21) Anmeldenummer: 21020498.8

(52) Gemeinsame Patentklassifikation (CPC):
F23D 14/22; C01B 3/363

(22) Anmeldetag: 07.10.2021

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Linde GmbH
82049 Pullach (DE)

(72) Erfinder:
• Weikl, Markus
82049 Pullach (DE)

• Ulmer, Sebastian
82049 Pullach (DE)
• Haselsteiner, Thomas
82049 Pullach (DE)
• Murer, Martin
82049 Pullach (DE)

(74) Vertreter: Fischer, Werner
Linde GmbH
Intellectual Property EMEA
Dr.-Carl-von-Linde-Straße 6-14
82049 Pullach (DE)

(54) **VORRICHTUNG UND VERFAHREN ZUM DURCHFÜHREN EINER PARTIELLEN OXIDAT**

(57) Die vorliegende Erfindung betrifft ein Verfahren zum Betreiben eines Brenners (100) zum Durchführen einer partiellen Oxidation, wobei der Brenner (100) einen zentralen Kanal (110), einen ersten ringförmigen Kanal (120) und einen zweiten ringförmigen Kanal (130) aufweist, wobei der erste ringförmige Kanal (120) zu dem zentralen Kanal (110) benachbart ist und diesen umgibt und wobei der zweite ringförmige Kanal (130) zu dem ersten ringförmigen Kanal (120) benachbart ist und diesen umgibt, wobei in einem Teillast-Betriebsmodus zwei benachbarten Kanälen dieser drei Kanäle (110, 120, 130) des Brenners (100) jeweils ein erstes Fluid ausgewählt aus einem Oxidationsmittel oder einem Moderator oder einer Mischung aus dem Moderator und dem Oxidationsmittel zugeführt wird und wobei dem dritten Kanal dieser drei Kanäle (110, 120, 130) des Brenners (100) ein zweites Fluid aufweisend einen Brennstoff, insbesondere der Brennstoff oder eine Mischung aus dem Brennstoff und dem Moderator, zugeführt wird.

Fig. 2

EP 4 163 546 A1

**Beschreibung**

Die Erfindung betrifft ein Verfahren sowie eine Vorrichtung zum Durchführen einer partiellen Oxidation.

Hintergrund der Erfindung

Im Zuge einer partiellen Oxidation kann ein kohlenwasserstoffhaltiger Brennstoff, z.B. Erdgas, Erdölgas oder Heizgas, mit einem Oxidationsmittel beispielsweise in Form eines sauerstoffhaltigen Gases, z.B. Sauerstoff oder Luft oder eine Mischung daraus, in einem unterstöchiometrischen Mischungsverhältnis teilweise verbrannt werden, um ein Synthesegas zu erzeugen. Als das Synthesegas wird ein Gemisch aus Kohlenmonoxid und Wasserstoff erzeugt, welches beispielsweise in Brennstoffzellen verwendet werden kann. Ferner kann dem Brennstoff und/oder dem Oxidationsmittel ein Moderator zugeführt werden, beispielsweise Wasserdampf, Kohlendioxid oder Stickstoff, um ein Verhältnis zwischen Wasserstoff und Kohlenmonoxid in dem erzeugten Synthesegas zu regulieren oder aus Sicherheitsgründen, um im Falle eines Fehlers bzw. einer Störung automatisch eine Spülung des Brenners durchzuführen.

Brenner zur partiellen Oxidation können als Mehrkanalbrenner mit mehreren konzentrischen Kanälen ausgebildet sein, durch welche jeweils ein Fluid geströmt werden kann. Zumeist weist ein derartiger Brenner einen zentralen Kanal und einen oder mehrere, diesen zentralen Kanal umgebende, ringförmige Kanäle auf. Ferner kann in einer Wand oder in mehreren Wänden des Brenners ein Kühlkanal für ein Kühlfluid, z.B. Wasser, zur Kühlung des Brenners vorgesehen sein.

An einem in Strömungsrichtung der Fluide betrachteten vorderen Ende des Brenners kann eine Brennerspitze vorgesehen sein, welche beispielsweise kegelstumpfförmig ausgebildet sein kann. In dieser Brennerspitze können die äußeren ringförmigen Kanäle beispielsweise unter einem vorgegebenen Neigungs- bzw. Auslasswinkel auf den zentralen Kanal zu verlaufen. Auf diese Weise können die durch die ringförmigen Kanäle geführten Fluide jeweils unter einem vorgegebenen Neigungs- bzw. Auslasswinkel relativ zu einem Fluidstrom des zentralen Kerns aus der Brennerspitze emittiert bzw. ausgelassen werden.

Beispielsweise beschreibt die US 4 888 031 A ein Verfahren zur partiellen Oxidation mittels einer konzentrischen Brenneranordnung aus vier konzentrischen Ringkanälen und einem zentralen Kanal.

Die US 3 255 966 A offenbart beispielsweise einen Brenner zur partiellen Oxidation mit einem inneren Kanal und einem zu diesem konzentrischen, ringförmigen äußeren Kanal. In einer äußeren Wand des Brenners sind Kühlkanale für ein Kühlfluid zum Kühlen des Brenners vorgesehen.

Offenbarung der Erfindung

Vor diesem Hintergrund werden ein Verfahren zum Betreiben eines Brenners zum Durchführen einer partiellen Oxidation sowie eine Vorrichtung zum Durchführen einer partiellen Oxidation mit den Merkmalen der unabhängigen Patentansprüche vorgeschlagen. Vorteilhafte Ausgestaltungen sind Gegenstand der Unteransprüche sowie der nachfolgenden Beschreibung.

Die erfindungsgemäße Vorrichtung ist dazu eingerichtet, gemäß einer bevorzugten Ausführungsform des erfindungsgemäßen Verfahrens betrieben zu werden. Vorteile und vorteilhafte Ausgestaltungen der erfindungsgemäßen Vorrichtung und des erfindungsgemäßen Verfahrens ergeben sich aus der nachfolgenden Beschreibung in entsprechender Weise.

Die Vorrichtung weist einen Brenner zum Durchführen einer partiellen Oxidation auf. Der Brenner weist einen zentralen Kanal, einen ersten ringförmigen Kanal und einen zweiten ringförmigen Kanal auf, wobei der erste ringförmige Kanal den zentralen Kanal umgibt bzw. um den zentralen Kanal herum angeordnet ist und zu diesem benachbart ist und wobei der zweite ringförmige Kanal den ersten ringförmigen Kanal umgibt bzw. um den ersten ringförmigen Kanal herum angeordnet ist und zu diesem benachbart ist. Ferner kann der Brenner beispielsweise auch als ein Mehrkanalbrenner mit einem zentralen Kanal und einer Vielzahl von insbesondere konzentrisch angeordneten ringförmigen Kanälen ausgebildet sein.

Im Rahmen der vorliegenden Erfindung wird der Brenner in einem Teillast-Betriebsmodus betrieben, wobei zwei benachbarten Kanälen der drei Kanäle des Brenners jeweils ein erstes Fluid ausgewählt aus einem Oxidationsmittel oder einem Moderator oder einer Mischung aus dem Moderator und dem Oxidationsmittel zugeführt wird. Dem dritten Kanal der drei Kanäle des Brenners wird ein zweites Fluid aufweisend einen Brennstoff zugeführt, insbesondere der Brennstoff oder eine Mischung aus dem Brennstoff und dem Moderator.

Somit wird einem Paar aus benachbarten Kanälen, d.h. entweder dem zentralen Kanal und dem ersten ringförmigen Kanal oder dem ersten ringförmigen Kanal und dem zweiten ringförmigen Kanal, jeweils ein Fluidstrom aufweisend das Oxidationsmittel und/oder den Moderator zugeführt. Dem verbleibenden Kanal wird ein brennstoffhaltiges Fluid zugeführt. Als Oxidationsmittel kann insbesondere ein sauerstoffhaltiges Gas, z.B. Sauerstoff oder Luft oder ein Sauerstoff-Luft-Gemisch, verwendet werden. Als Moderator kann insbesondere Wasser bzw. Wasserdampf verwendet werden, ferner beispielsweise auch Kohlendioxid oder Stickstoff. Als Brennstoff ist insbesondere ein kohlenstoffhaltiger Brennstoff vorgesehen, z.B. Erdgas, Erdölgas, Heizgas usw.

Insbesondere kann das erste Fluid den beiden benachbarten Kanälen jeweils individuell angepasst zugeführt werden. Zweckmäßigerweise können eine Durchflussmenge, eine Durchflussgeschwindigkeit und/oder eine Zusammensetzung des ersten Fluids in jedem der beiden benachbarten Kanäle jeweils individuell eingestellt werden. Besonders zweckmäßig können somit die Strömungen des jeweiligen ersten Fluids in den entsprechenden benachbarten Kanälen relativ zueinander angepasst werden. Entsprechend können zweckmäßigerweise auch die Durchflussmenge, Durchflussgeschwindigkeit und Zusammensetzung des zweiten Fluids durch den verbleibenden Kanal flexibel eingestellt und angepasst werden. Den einzelnen Kanälen des Brenners kann jeweils individuell ein spezifisch für den speziellen Teillast-Betrieb angepasstes Fluid oder Fluidgemisch zugeführt werden und individuell geregelt werden.

Im Rahmen der vorliegenden Erfindung wurde erkannt, dass sich durch eine derartige Fluidführung durch die einzelnen Kanäle ein Teillast-Betrieb des Brenners flexibel über einen großen Lastbereich einstellen lässt. Durch Anpassung der einzelnen Fluidströme durch die Brennerkanäle kann die Last, unter welcher der Brenner betrieben wird, flexibel eingestellt und geregelt werden. Besonders zweckmäßig ergibt sich die Möglichkeit, den Brenner in Volllast zu betreiben und bei Bedarf durch entsprechend geänderte Fluidführung flexibel in den Teillast-Betrieb zu wechseln.

Bei herkömmlichen Brennern zur partiellen Oxidation ist ein Lastbereich, in welchem dieser Brenner betrieben werden kann, zumeist begrenzt und fest vorgegeben. So können herkömmliche Brenner oftmals beispielsweise nur in einem Regelbereich zwischen z.B. 70% und 100% betrieben werden. Eine Reduzierung auf einen Teillastbetrieb von beispielsweise unter 70% ist zumeist nicht möglich. Für einen derartigen Betrieb ist zumeist ein eigener, zusätzlicher Brenner vorgesehen, dessen maximale Last entsprechend geringer ausgelegt ist. Zumeist ist es in herkömmlichen Brennern nötig, Zusammensetzung und Austrittsgeschwindigkeiten der Fluidströme möglichst konstant aufrecht zu erhalten, um ein Flammenabheben aufrecht zu erhalten und um ein Rückbrennen zu verhindern. Zwar können in herkömmlichen Brennern Brennstoff- und Oxidationsmittelmengen reduziert und Dampfmengen erhöht werden, um die Austrittsgeschwindigkeiten möglichst konstant zu halten, jedoch kann sich dies auf die Brennereffizienz auswirken und zu einer Erhöhung der Betriebskosten führen. Beispielsweise wird dadurch ein Dampf- und Kühlwasserverbrauch erhöht und ein Kohlenmonoxid/Wasserstoff Verhältnis des erzeugten Synthesegases verändert. Beispielsweise wird eine Kohlenmonoxid Produktion im Vergleich zu dem VolllastBetrieb reduziert, wodurch sich der CO-Anteil des Synthesegases reduziert und der $H_2$-Anteil erhöht. Im Gegensatz dazu kann der Brenner gemäß dem vorliegenden Verfahren besonders einfach in einem Teillast-Betriebsmodus betrieben werden, ohne Auswirkungen auf die Brennereffizienz und das Kohlenmonoxid/Wasserstoff Verhältnis des erzeugten Synthesegases und ferner ohne eine Erhöhung der Betriebskosten.

Vorteilhafterweise wird einem der zwei benachbarten Kanäle das jeweilige erste Fluid mit einer höheren Durchflussgeschwindigkeit zugeführt als dem anderen der zwei benachbarten Kanäle, insbesondere jeweils abhängig von der Last bzw. dem konkreten Lastwert, unter welchem der Brenner betrieben werden soll. Besonders zweckmäßig wird der erste ringförmige Kanal mit höherer Durchflussgeschwindigkeit betrieben und der entsprechende benachbarte Kanal mit einer entsprechend der Last angepassten niedrigeren Durchflussgeschwindigkeit. Durch die höhere Durchflussgeschwindigkeit in einem der beiden benachbarten Kanäle kann besonders zweckmäßig eine ausreichende konvektive Kühlung des Brenners erreicht werden. Ferner kann eine hohe Austrittsgeschwindigkeit des Fluidstroms in diesem Kanal mit der höheren Durchflussgeschwindigkeit erreicht werden, wodurch besonders zweckmäßig ein Rückbrennen verhindert werden kann. Da das vor der Brennerspitze erzeugte Sauerstoff-Brennstoff-Gasgemisch sehr kurze Zündungszeiten bzw. ultrakurze Zündverzögerungszeiten aufweist, lässt sich nur ein geringes Abheben bzw. Abtrennen der Brennerflamme von der Brennerspitze erreichen, so dass die Flamme in sehr kurzer Entfernung vor der Brennerspitze brennt und an der Brennerspitze hohe Temperaturen von über 3000°C auftreten können. Durch die höhere Austrittsgeschwindigkeit der jeweiligen Fluidströmung aus dem Kanal mit der höheren Durchflussgeschwindigkeit kann zweckmäßigerweise eine ausreichend hohe Flammenabhebung bzw. Abtrennung erreicht werden, um Rückbrennen und Beschädigungen des Brenners zu verhindern. Ferner kann durch die höhere Austrittsgeschwindigkeit eine Abschirmung ermöglicht werden, so dass brennbares Gasgemisch oder Brennstoff von der Brennerspitze nicht zurück in den Brenner strömen kann. Ferner kann eine derartige Rückströmung durch den schwachen Gasstrom mit der geringeren Durchflussgeschwindigkeit durch den anderen der beiden benachbarten Kanäle verhindert werden.

Vorzugsweise wird den zwei benachbarten Kanälen das erste Fluid jeweils mit einer unterschiedlichen Zusammensetzung zugeführt, insbesondere jeweils abhängig von der Last. Somit kann den beiden benachbarten Kanälen abhängig von der Last ein individuell zusammengesetztes erstes Fluid zugeführt werden, insbesondere jeweils ein Oxidationsmittel-Moderator-Gemisch mit individuellen Oxidationsmittel- und Moderator-Anteilen. Beispielsweise kann einem der beiden benachbarten Kanäle ein Sauerstoff-Dampf-Gemisch mit einem geringen Anteil an Sauerstoff oder auch nur Dampf zugeführt werden, insbesondere mit einer geringen Durchflussmenge. Dem anderen der beiden benachbarten Kanäle kann beispielsweise nur Sauerstoff oder ein Sauerstoff-Dampf-Gemisch mit hohem Sauerstoffanteil zugeführt werden, insbesondere mit einer hohen Durchflussmenge, etwa mit einer gleichen Durchflussmenge wie in einem Volllast-Betriebsmodus oder mit einer geringfügig reduzierten Durchflussmenge gegenüber dem Volllast-Betriebsmodus.

Durch ein derartiges individuelles Anpassen der Zusammensetzung und der Durchflussgeschwindigkeit des ersten Fluids in den beiden benachbarten Kanälen kann der Teillast-Betrieb bzw. die konkrete Last, unter welcher der Brenner konkret betrieben wird, flexibel eingestellt, angepasst und geregelt werden.

Vorteilhafterweise kann der Brenner in dem Teillast-Betriebsmodus bis maximal 50% der maximalen Last betrieben werden, bevorzugt bis maximal 25%, weiter bevorzugt bis maximal 10%. Wie obig erläutert können herkömmliche Brenner zur partiellen Oxidation oftmals nur in einem begrenzten Lastbereich betrieben werden, etwa nur in einem Regelbereich zwischen z.B. 70% und 100%. Durch die Fluidführung gemäß dem vorliegenden Verfahren lässt sich der Brenner besonders zweckmäßig bei deutlich geringeren Lasten von insbesondere unter 50% betreiben.

Gemäß einer bevorzugten Ausführungsform werden in dem Teillast-Betriebsmodus dem zentralen Kanal und dem ersten ringförmigen Kanal des Brenners jeweils als das erste Fluid das Oxidationsmittel oder der Moderator oder eine Mischung aus dem Moderator und dem Oxidationsmittel zugeführt. Bevorzugt wird dem zweiten ringförmigen Kanal als das zweite Fluid der Brennstoff oder eine Mischung aus dem Brennstoff und dem Moderator zugeführt. Der zentrale Kanal und der erste ringförmige Kanal werden in diesem Fall als entsprechende benachbarte Kanäle zur Oxidationsmittel- und/oder Moderatorzufuhr verwendet und der zweite ringförmige Kanal zur Brennstoffzufuhr.

Vorzugsweise wird dabei dem ersten ringförmigen Kanal das jeweilige erste Fluid mit höherer Durchflussgeschwindigkeit zugeführt als dem zentralen Kanal, insbesondere jeweils abhängig von der Last. Zweckmäßigerweise wird der erste ringförmige Kanal somit mit hoher Geschwindigkeit betrieben und der zentrale Kanal mit einer entsprechend der Last angepassten niedrigen Geschwindigkeit. Durch eine derartige höhere Durchflussgeschwindigkeit des radial weiter außenliegenden Kanals der beiden benachbarten Kanäle kann zweckmäßigerweise eine Abschirmung des anderen, radial weiter innen liegenden Kanals erreicht werden, so dass insbesondere ein Rückbrennen sowie ein Rückströmen des brennbaren Gasgemischs oder des Brennstoffs von der Brennerspitze in den zentralen Kanal verhindert werden kann.

Insbesondere wird durch den zentralen Kanal ein relativ schwacher Strom mit einer geringen Menge an Sauerstoff und Dampf oder nur Dampf geleitet. Durch den ersten ringförmigen Kanal wird zweckmäßigerweise Sauerstoff oder ein Sauerstoff-Dampf-Gemisch geleitet, insbesondere mit einer gleichen Durchflussmenge wie in einem Volllast-Betriebsmodus oder mit einer geringfügig reduzierten Durchflussmenge gegenüber dem Volllast-Betriebsmodus. Durch den zweiten ringförmigen Kanal wird insbesondere der Brennstoff oder ein Brennstoff-Dampf-Gemisch geleitet, mit der prozesstechnisch benötigten Durchflussmenge im Verhältnis zur Gesamtsauerstoffmenge. Durch die hohe Durchflussgeschwindigkeit in dem ersten ringförmigen Kanal kann besonders zweckmäßig eine ausreichende konvektive Kühlung des Brenners erreicht werden, insbesondere des zentralen Kanals bzw. der Wand des zentralen Kanals. Ferner kann eine hohe Austrittsgeschwindigkeit dieses Stroms des ersten ringförmigen Kanals erreicht werden, wodurch besonders zweckmäßig ein Rückbrennen verhindert werden kann. Da das vor der Brennerspitze erzeugte Sauerstoff-Brennstoff-Gasgemisch sehr kurze Zündungszeiten bzw. ultrakurze Zündverzögerungszeiten aufweist, lässt sich nur ein geringes Abheben bzw. Abtrennen der Brennerflamme von der Brennerspitze erreichen, so dass die Flamme in sehr kurzer Entfernung vor der Brennerspitze brennt und an der Brennerspitze hohe Temperaturen von über 3000°C auftreten können. Durch die hohe Austrittsgeschwindigkeit der Fluidströmung aus dem ersten ringförmigen Kanal kann zweckmäßigerweise eine ausreichend hohe Flammenabhebung bzw. Abtrennung erreicht werden, um Rückbrennen und Beschädigungen des Brenners zu verhindern. Ferner kann der zentrale Kanal durch die hohe Austrittsgeschwindigkeit des Fluids aus dem ersten ringförmigen Kanal abgeschirmt werden, wodurch insbesondere verhindert wird, dass das brennbare Gasgemisch von der Brennerspitze oder Brennstoff von dem zweiten ringförmigen Kanal in den zentralen Kanal zurückströmt. Ferner kann eine derartige Rückströmung durch den schwachen Gasstrom in dem zentralen Kanal verhindert werden.

Gemäß einer alternativen bevorzugten Ausführungsform wird in dem Teillast-Betriebsmodus dem zentralen Kanal als das zweite Fluid der Brennstoff oder eine Mischung aus dem Brennstoff und dem Moderator zugeführt. Dem ersten ringförmigen Kanal und dem zweiten ringförmigen Kanal werden jeweils vorzugsweise als das erste Fluid das Oxidationsmittel oder der Moderator oder eine Mischung aus dem Oxidationsmittel und dem Moderator zugeführt. In diesem Fall werden zweckmäßigerweise die beiden ringförmigen Kanäle als entsprechende benachbarte Kanäle zur Oxidationsmittel-/Moderatorzufuhr verwendet und der zentrale Kanal ist zur Zufuhr von Brennstoff vorgesehen.

Vorzugsweise wird in diesem Fall dem ersten ringförmigen Kanal das jeweilige erste Fluid mit höherer Durchflussgeschwindigkeit zugeführt als dem zweiten ringförmigen Kanal, insbesondere jeweils abhängig von der Last. Der zweite ringförmige Kanal wird zweckmäßigerweise mit einer entsprechend der Last angepassten niedrigen Geschwindigkeit betrieben im Vergleich zu dem ersten ringförmigen Kanal. Durch die höhere Durchflussgeschwindigkeit des ersten ringförmigen Kanals kann zweckmäßigerweise eine Abschirmung des zweiten ringförmigen Kanals erreicht werden, um ein Rückbrennen sowie ein Rückstrom des brennbaren Gasgemischs oder des Brennstoffs in den zweiten ringförmigen Kanal zu verhindern.

Insbesondere wird durch den zweiten ringförmigen Kanal ein schwacher Strom mit einer geringen Menge an Sauerstoff und Dampf oder nur Dampf geleitet. Durch den ersten ringförmigen Kanal wird zweckmäßigerweise Sauerstoff oder ein Sauerstoff-Dampf-Gemisch geleitet, insbesondere mit gleicher Durchflussmenge wie im Volllast-Betrieb oder mit einer geringfügig reduzierten Durchflussmenge gegenüber der Volllast. Der Brennstoff oder ein Brennstoff-Dampf-Gemisch wird durch den zentralen Kanal mit prozesstechnisch benötigter Durchflussmenge im Verhältnis zur Gesamtsauerstoffmenge geleitet.

Vorteilhafterweise entspricht ein Radius des zentralen Kanals mindestens einem Radius des ersten ringförmigen Kanals dividiert durch $\sqrt{3}$, ferner vorteilhafterweise mindestens dem Radius des ersten ringförmigen Kanals dividiert durch $\sqrt{2}$. Zweckmäßigerweise kann eine Querschnittsfläche oder Austrittsfläche des zentralen Kanals mindestens einem Drittel der Querschnitts- oder Austrittsfläche des ersten ringförmigen Kanals entsprechen, insbesondere mindestens der Hälfte der Querschnitts- bzw. Austrittsfläche des ersten ringförmigen Kanals. Beispielsweise kann der Brenner durch ein derartiges Radienverhältnis auf z.B. 50% Teillast reduziert werden, wenn eine Austrittsgeschwindigkeit des Fluids aus dem ersten ringförmigen Kanal auf 70% des maximalen Werts reduziert wird. Besonders bevorzugt kann der Radius des zentralen Kanals bis zu einem Wert gewählt werden, welcher dem Radius des ersten ringförmigen Kanals dividiert durch $\sqrt{5/4}$ entspricht. Durch ein derartiges Radienverhältnis kann der Brenner besonders zweckmäßig bei Teillastverhältnissen von unter 20% betrieben werden.

Gemäß einer bevorzugten Ausführungsform ist eine Zufuhr- und Reguliervorrichtung vorgesehen und dazu eingerichtet, abhängig von einem Betriebsmodus, in welchem der Brenners betrieben werden soll, den einzelnen Kanälen des Brenners jeweils individuell bzw. betriebsmodusspezifisch wenigstens ein Fluid zuzuführen, insbesondere jeweils ausgewählt aus dem Brennstoff, dem Oxidationsmittel, dem Moderator und ferner insbesondere einem Spülfluid, und abhängig von dem Betriebsmodus Durchflüsse der einzelnen zugeführten Fluide durch die einzelnen Kanäle jeweils individuell bzw. betriebsmodusspezifisch zu regulieren bzw. zu regeln oder zu steuern.

Somit kann der Brenner mit Hilfe dieser Zufuhr- und Reguliervorrichtung neben dem Teillast-Betriebsmodus noch in weiteren Betriebsmodi betrieben werden und den einzelnen Kanälen kann in verschiedenen Betriebsmodi jeweils individuell ein spezifisch für den jeweiligen Betriebsmodus angepasstes Fluid oder Fluidgemisch zugeführt werden. Die Menge der zugeführten Fluide oder Fluidmischungen bzw. deren Durchflüsse, Durchflussmengen oder Durchflussgeschwindigkeiten durch die einzelnen Kanäle kann individuell geregelt und an den jeweiligen Betriebsmodus angepasst werden.

Die Zufuhr- und Reguliervorrichtung stellt somit eine Möglichkeit bereit, um in verschiedenen Betriebsmodi jeweils verschiedene Fluide oder Fluidmischungen durch die einzelnen Brennerkanäle zu leiten. Der Brenner kann flexibel in unterschiedlichen Betriebsmodi betrieben werden. Während des Betriebs des Brenners kann flexibel geändert werden, welches Fluid oder Fluidgemisch durch welchen Kanal geleitet wird. Somit kann besonders zweckmäßig während des Betriebs des Brenners flexibel zwischen den einzelnen Betriebsmodi gewechselt werden, insbesondere automatisch und gesteuert mit Hilfe der Zufuhr- und Reguliervorrichtung, insbesondere ohne dass es dabei aufwendiger Umbaumaßnahmen bedarf.

In herkömmlichen Brennern zur partiellen Oxidation ist zumeist ein Kanal für ein spezielles Fluid fest vorgesehen und es ist nicht ohne weiteres möglich zu ändern, welches spezielle Fluid durch welchen Kanal geleitet wird. Ferner sind die einzelnen Kanäle zumeist für ein vorgegebenes Intervall von Durchflussmengen ausgelegt, so dass es zumeist nicht ohne weiteres möglich ist, die Durchflüsse der einzelnen Fluide relativ zueinander zu verändern, ohne dass es zu einer Gefahr einer möglichen Beschädigung des Brenners kommt. In unterschiedliche Betriebsmodi bedarf es jedoch oftmals der Strömung unterschiedlicher Fluide durch die einzelnen Kanäle mit jeweils unterschiedlichen Durchflüssen. Wie obig erläutert, können herkömmliche Brenner zumeist nur in einem fest vorgegebenen Betriebsmodus betrieben werden. Für unterschiedliche Betriebsmodi sind herkömmlicherweise oftmals verschiedene Brenner vorgesehen, beispielsweise ein eigener, zusätzlicher Brenner für einen Teillast-Betrieb, dessen maximale Last entsprechend geringer ausgelegt ist. Ferner können herkömmlicherweise beispielsweise für einen Standby- bzw. Bereitschafts-Betriebsmodus und einen Aufheiz- bzw. Heat-Up-Betriebsmodus jeweils individuelle Brenner vorgesehen sein.

Durch die Zufuhr- und Reguliervorrichtung wird es nun ermöglicht individuell zu wechseln, welche Fluide durch welche Brennerkanäle mit welchen Durchflussmengen geleitet werden. Somit bedarf es nicht verschiedener Brenner für verschiedene Betriebsmodi, sondern ein Brenner kann je nach Bedarf flexibel in unterschiedlichen Betriebsmodi und in unterschiedlichen Lastbereichen betrieben werden. Eine Flexibilität des Brenners bzw. des Brennerbetriebs kann somit erhöht werden. Kosten und Aufwand können reduziert werden.

Zweckmäßigerweise können die einzelnen Fluide in den verschiedenen Betriebsmodi jeweils flexibel unter individuellen Bedingungen bzw. mit individuellen Eigenschaften in die einzelnen Kanäle geleitet werden. So können Temperaturen der einzelne Fluide zweckmäßig je nach Bedarf gewählt werden, insbesondere von Raumtemperatur bis hin zu hohen Werten von beispielsweise bis zu 500°C oder bis zu 800°C, etwa wenn ein entsprechendes Fluid vor der Zufuhr in den jeweiligen Kanal vorgewärmt wird. Beispielsweise kann auch der Druck der Fluide jeweils flexibel gewählt werden, zweckmäßigerweise abhängig von einem Reaktordruck. Beispielsweise können die Fluiddrücke von dem umgebenden Luftdruck bis hin zu hohen Werten von z.B. bis zu 30, 90 oder 120bar gewählt werden. Die Abmessungen der einzelnen Kanäle, insbesondere deren Radien, können zweckmäßigerweise abhängig von der Leistung des Brenners gewählt werden, insbesondere um derartige Austrittsgeschwindigkeiten zu erreichen, dass sich die Fluide beim Austritt aus dem Brenners bestmöglich vermischen und dass eine möglichst effiziente partielle Oxidationsreaktion ermöglicht wird.

Besonders vorteilhaft kann den einzelne Kanälen mit Hilfe der Zufuhr- und Regulierungsvorrichtung abhängig von dem Betriebsmodus jeweils wenigstes ein Fluid ausgewählt aus einem Brennstoff, insbesondere einem kohlenstoffhaltigen Brennstoff, z.B. Erdgas, Erdölgas, Heizgas usw., einem Oxidationsmittel, insbesondere einem sauerstoffhaltigen Gas, z.B. Sauerstoff oder Luft oder ein Sauerstoff-Luft-Gemisch, einem Moderator, insbesondere einem dampfhaltigen Fluid, z.B. Dampf bzw. Wasserdampf, und ferner insbesondere einem Spülfluid, Spülgas bzw. Reinigungsfluid, z.B. Stickstoff, zugeführt werden. Besonders zweckmäßig ist es möglich, je nach Betriebsmodus unterschiedlichen Brennerkanälen unterschiedliche Oxidationsmittel zuzuführen. So kann beispielsweise in einzelnen Betriebsmodi Sauerstoff als Oxidationsmittel zugeführt werden und in anderen Betriebsmodi beispielsweise Luft.

Zweckmäßigerweise ist die Zufuhr- und Reguliervorrichtung dazu eingerichtet, Fluidanschlüsse der einzelnen Kanäle des Brenners jeweils abhängig von dem Betriebsmodus bzw. betriebsmodusspezifisch mit einer Brennstoffzufuhr und/oder mit wenigstens einer Oxidationsmittelzufuhr zu verbinden. Den einzelnen Brennerkanälen kann somit je nach Betriebsmodus individuell Brennstoff oder ein Oxidationsmittel mit individuellen Durchflussmengen zugeführt werden. Zweckmäßigerweise können zu diesem Zweck Ventile und/oder Verteiler vorgesehen sein, um die einzelnen Fluidanschlüsse mit der jeweiligen Fluidzufuhr zu verbinden. Diese einzelnen Fluidzufuhren können jeweils insbesondere einen entsprechenden Fluidbehälter oder Fluidspeicher umfassen und ferner beispielsweise eine Pumpe, Zufuhr- bzw. Verbindungsleitungen usw.

Zweckmäßigerweise können zwei verschiedene Oxidationsmittelzufuhren vorgesehen sein, wenn beispielsweise durch mehrere Kanäle des Brenners jeweils ein Oxidationsmittel geführt werden soll, insbesondere um jeweils individuell und unabhängig voneinander einen entsprechenden Oxidationsmitteldurchfluss in den jeweiligen Kanälen regulieren zu können. Beispielsweise können die beiden Oxidationsmittelzufuhren zur Zufuhr desselben Oxidationsmittels vorgesehen sein. Ferner können die erste und die zweite Oxidationsmittelzufuhr jeweils auch zur Zufuhr eines unterschiedlichen Oxidationsmittels vorgesehen sein, z.B. von Luft und Sauerstoff, insbesondere um einzelnen Kanälen ein Luft-Sauerstoff-Gemisch als Oxidationsmittel zuzuführen oder um beispielsweise in unterschiedlichen Betriebsmodi unterschiedliche Oxidationsmittel zuzuführen.

Insbesondere ist die Zufuhr- und Reguliervorrichtung dazu eingerichtet, eine Moderatorzufuhr abhängig von dem Betriebsmodus bzw. betriebsmodusspezifisch mit den Fluidanschlüssen der einzelnen Kanäle des Brenners zu verbinden. Beispielsweise kann die Moderatorzufuhr zu diesem Zweck jeweils über ein entsprechendes Ventil an die einzelnen Fluidanschlüsse angebunden werden. Insbesondere können diese Ventile als Sicherheitsventile vorgesehen sein, um im Falle eines Fehlers oder einer Störung automatisch eine Spülung des Brenners bzw. der einzelnen Brennerkanäle mit dem Moderator durchführen zu können. Im regulären Betrieb können die Ventile zweckmäßigerweise regulär angesteuert werden, um dem Brennstoff und/oder dem Oxidationsmittel den Moderator zuzufügen und um somit z.B. ein Verhältnis zwischen Wasserstoff und Kohlenmonoxid in dem erzeugten Synthesegas zu regulieren. Ferner kann den einzelnen Brennerkanälen bei Bedarf zweckmäßigerweise auch nur der Moderator zugeführt werden, insbesondere indem der entsprechende Fluidanschluss mit der Moderatorzufuhr, aber mit keiner weiteren Fluidzufuhr verbunden wird.

Zweckmäßigerweise ist die Zufuhr- und Reguliervorrichtung dazu eingerichtet, eine Spülfluidzufuhr abhängig von dem Betriebsmodus bzw. betriebsmodusspezifisch mit den Fluidanschlüssen der einzelnen Kanäle des Brenners zu verbinden. Insbesondere kann diese Spülfluidzufuhr zu diesem Zweck über entsprechende Ventile an die einzelnen Fluidanschlüsse angebunden werden. Insbesondere können auch diese Ventile jeweils als Sicherheitsventile vorgesehen sein, um im Falle eines Fehlers oder einer Störung eine automatische Spülung der Brennerkanäle mit dem Spülfluid durchführen. Insbesondere umfasst die Spülfluidzufuhr eine unabhängige und hochverlässliche Spülfluid- bzw. Spülgasquelle, beispielsweise einen Pufferbehälter.

Insbesondere ist dem Brenner eine Abscheidungsvorrichtung zum Entfernen von $CO_2$ aus einem von dem Brenner erzeugten Gas nachgeschaltet. Die Zufuhr- und Reguliervorrichtung ist zweckmäßigerweise dazu eingerichtet, $CO_2$ von der Abscheidungsvorrichtung abhängig von dem Betriebsmodus den Fluidanschlüssen der einzelnen Kanäle zuzuführen. Beispielsweise kann zu diesem Zweck eine Rückführung bzw. Rückführleitung von der Abscheidungsvorrichtung vorgesehen sein, welche abhängig von dem Betriebsmodus mit den entsprechenden Fluidanschlüssen verbunden werden kann, beispielsweise über entsprechende Ventile. Zweckmäßigerweise kann dem Brennstoff somit eine Menge an $CO_2$ als Moderator zugeführt werden, beispielsweise um ein Verhältnis zwischen Wasserstoff und Kohlenmonoxyd in dem erzeugten Synthesegas zu regulieren.

Besonders zweckmäßig kann den einzelnen Kanälen mit Hilfe der Zufuhr- und Reguliervorrichtung somit je nach Betriebsmodus individuell nur der Brennstoff oder eine Mischung aus dem Brennstoff und dem Moderator und/oder $CO_2$, nur das Oxidationsmittel oder eine Mischung aus dem Oxidationsmittel und dem Moderator, nur der Moderator oder nur das Spülfluid oder eine Mischung aus dem Spülfluid und dem Moderator zugeführt werden.

Der zentrale Kanal des Brenners wird zweckmäßigerweise durch ein erstes, zentrales Rohr gebildet bzw. begrenzt, der erste ringförmige Kanal durch ein dieses zentrale Rohr insbesondere konzentrisch umgebendes zweites Rohr und der dritte Kanal durch ein dieses zweite Rohr konzentrisch umgebendes drittes Rohr. Diese Rohre sind dabei zweckmäßigerweise jeweils individuell und unabhängig voneinander mit einer entsprechenden Fluidzufuhr bzw. Verbindungsleitung verbindbar. Besonders zweckmäßig ist das zentrale Rohr axial verschiebbar innerhalb des zweiten Rohres angeordnet. Insbesondere kann dieses zentrale Rohr auf diese Weise auch aus dem zweiten Rohr entfernt und durch ein anderes Rohr ersetzt werden, so dass besonders zweckmäßig ein Verhältnis der Radien bzw. der Querschnitts- oder Austrittsflächen des zentralen Kanals und des ersten ringförmigen Kanals variiert werden kann. Beispielsweise kann auf diese Weise ein zweikanaliger Brenner mit einem zentralen Kanal und einem diesen umgegebenen, ringförmigen Kanal nachgerüstet werden, indem ein entsprechendes Rohr oder rohrförmiges Element in den zentralen Kanal axial eingefügt wird.

Ein Austausch des zentralen Rohrs kann sinnvoll sein, um einen Wechsel des durchströmten Mediums bei ansonsten identischem Brenner zu ermöglich. Bei gleicher Brennergeometrie kann somit durch individuelle Flanschanschlüsse die Betriebssicherheit erhöht werden, ohne den Brenner vollständig zu wechseln. Besonders zweckmäßig kann das den zentralen Kanal bildende Rohr auf konstruktiv einfache und aufwandsarme Weise ausgetauscht werden, wenn von einem Betriebsmodus, in welchem Brennstoff durch den zentralen Kanal geleitet wird, in einen Betriebsmodus gewechselt wird, in welchem Oxidationsmittel durch den zentralen Kanal geleitet wird. Zweckmäßigerweise können somit sauerstoffführende Brennerabschnitte vor Einströmen von Brennstoff geschützt werden. Insbesondere können verschiedene Bauteile mit jeweils eigener Verbindung zu Sauerstoff oder Brennstoff vorgesehen sein, welches für die spezifischen Betriebspunkte bzw. Betriebsmodi eingebaut werden.

Gemäß einer bevorzugten Ausführungsform wird in einem Spül-Betriebsmodus mit Hilfe der Zufuhr- und Reguliervorrichtung dem zentralen Kanal des Brenners der Moderator, insbesondere Wasserdampf, oder das Spülfluid, insbesondere Stickstoff, oder eine Mischung aus dem Moderator und dem Spülfluid zugeführt. Ferner wird bevorzugt auch dem ersten ringförmigen Kanal und dem zweiten ringförmigen Kanal jeweils der Moderator oder das Spülfluid oder eine Mischung aus dem Moderator und dem Spülfluid zugeführt. In diesem Spül-Betriebsmodus werden zweckmäßigerweise alle Brennerkanäle mit Wasserdampf und/oder einem Hochdruck-Stickstoff-Strom gespült, um einen Rückfluss von heißem Synthesegas in den Brenner zu verhindern. Insbesondere kann dieser Spül-Betriebsmodus bei einem Fehler oder einer Störung durchgeführt werden, um den Brenner in einen sicheren Zustand zu überführen und sicher deaktivieren zu können. Der Spül-Betriebsmodus wird zweckmäßigerweise so lange durchgeführt, bis ein Druck aus dem Brenner oder aus einer den Brenner aufweisenden Anlage, z.B. einem Reaktor, einem Ofen usw., vollständig abgelassen bzw. abgebaut ist oder ein Normalbetrieb des Brenners wiederhergestellt wird.

Vorzugsweise wird der Brenner in einem Bereitschafts- bzw. Standby-Betriebsmodus und/oder in einem Aufheiz- bzw. Heat-Up-Betriebsmodus betrieben. Beispielsweise können in dem zentralen Kanal eine Zündvorrichtung und/oder eine Überwachungsvorrichtung zum Überwachen des Standby- bzw. Aufheizbetriebs vorgesehen sein.

Vorzugsweise wird in diesem Bereitschafts- und/oder dem Aufheiz-Betriebsmodus mit Hilfe der Zufuhr- und Reguliervorrichtung dem zentralen Kanal des Brenners der Brennstoff oder eine Mischung aus dem Brennstoff und dem Moderator zugeführt, dem ersten ringförmigen Kanal das Oxidationsmittel, vorzugsweise Luft, und dem zweiten ringförmigen Kanal das Oxidationsmittel oder der Moderator oder eine Mischung aus dem Oxidationsmittel und dem Moderator. In diesen Betriebsmodi wird bevorzugt Luft als Oxidationsmittel verwendet, wodurch die Flammentemperatur verringert wird und das Risiko einer Überhitzung des Brenners reduziert wird. Durch den zweiten ringförmigen Kanal wird insbesondere nur ein geringer Spülfluss aus dem Oxidationsmittel und/oder dem Moderator mit einer geringen Durchflussmenge geleitet.

Alternativ kann in dem Bereitschafts- und/oder dem Aufheiz-Betriebsmodus mit Hilfe der Zufuhr- und Reguliervorrichtung vorzugsweise dem zentralen Kanal des Brenners das Oxidationsmittel, vorzugsweise Luft, zugeführt werden, dem ersten ringförmigen Kanal der Brennstoff oder eine Mischung aus dem Brennstoff und dem Moderator und dem zweiten ringförmigen Kanal das Oxidationsmittel oder der Moderator oder eine Mischung aus dem Oxidationsmittel und dem Moderator. Somit können die Ströme durch den zentralen und den ersten ringförmigen Kanal in dem Bereitschafts- bzw. Aufheiz-Betriebsmodus auch vertauscht werden. Insbesondere kann somit zwischen einer Diffusionsflamme und einer inversen Diffusionsflamme gewechselt werden.

Wenn beispielsweise in dem Aufheiz-Betriebsmodus eine Zufuhr mit Brennstoff durchströmt wird und daraufhin in einen Betriebsmodus gewechselt werden soll, in welchem diese Zufuhr mit Sauerstoff durchströmt werden soll, kann die jeweilige Zufuhr aus Sicherheitsgründen zweckmäßigerweise ausgetauscht werden, beispielsweise mit Hilfe eines axial verschiebbaren, austauschbaren Rohrs gemäß obiger Erläuterung.

Bevorzugt wird in einem Abschalt-Betriebsmodus bzw. Turn-Down mit Hilfe der Zufuhr- und Reguliervorrichtung dem zentralen Kanal des Brenners das Oxidationsmittel, insbesondere Sauerstoff, oder eine Mischung aus dem Oxidationsmittel und dem Moderator zugeführt, dem ersten ringförmigen Kanal des Brenners der Moderator, insbesondere Wasserdampf, und dem zweiten ringförmigen Kanal des Brenners der Brennstoff oder eine Mischung aus dem Brennstoff und dem Moderator. Der Brennstoff oder ein Brennstoff-Dampf-Gemisch wird dem zweiten ringförmigen Kanal insbesondere mit reduzierter Durchfluss- bzw. Austrittsgeschwindigkeit zugeführt. Zweckmäßigerweise wird dem ersten ringförmigen Kanal Dampf zur Abschirmung zugeführt und dem zentralen Kanal das Oxidationsmittel mit oder ohne Dampf mit einer angepassten Durchflussmenge. Somit kann insbesondere verhindert werden, dass sich durch die reduzierte Austrittsgeschwindigkeit aus dem zweiten ringförmigen Kanal die Gefahr des Rückbrennens erhöht. Dieser Betrieb des Brenner kann zu einer verminderten Leistung bezüglich der Durchmischung der Fluidströme nach dem Brenneraustritt führen, was sich zweckmäßigerweise für das Herunterfahren bzw. den Abschaltvorgang des Brenner eignet, da das Reaktionsvolumen für diesen Fall insbesondere überdimensioniert ist.

Vorteilhafterweise kann mit Hilfe der Zufuhr- und Reguliervorrichtung dem zugeführtem Brennstoff oder der zugeführten Mischung aus dem Brennstoff und dem Moderator abhängig von dem Betriebsmodus ferner $CO_2$ zugeführt werden und ein Durchfluss des zugeführten $CO_2$ kann abhängig von dem Betriebsmodus reguliert werden. Zweckmäßigerweise kann das $CO_2$ als Moderator zum Regulieren des Wasserstoff/Kohlenmonoxid Verhältnisses in dem Synthesegas verwendet werden. Vorzugsweise wird das $CO_2$ als der nachgeschalteten Abscheidungsvorrichtung entnommen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1    zeigt einen Brenner einer bevorzugten Ausgestaltung einer erfindungsgemäßen Vorrichtung zum Durchführen einer partiellen Oxidation in einer schematischen Schnittansicht, die dazu eingerichtet ist, gemäß einer bevorzugten Ausführungsform des erfindungsgemäßen Verfahrens betrieben zu werden.

Figur 2    zeigt schematisch eine bevorzugte Ausgestaltung einer erfindungsgemäßen Vorrichtung zum Durchführen einer partiellen Oxidation, die dazu eingerichtet ist, gemäß einer bevorzugten Ausführungsform des erfindungsgemäßen Verfahrens betrieben zu werden.

Ausführungsform(en) der Erfindung

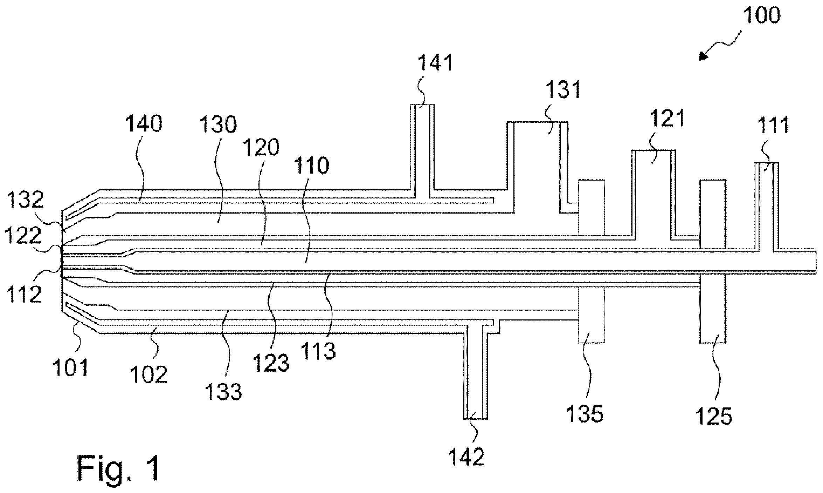

Figur 1 zeigt in einer schematischen Schnittansicht einen Brenner 100 einer bevorzugten Ausgestaltung einer erfindungsgemäßen Vorrichtung zum Durchführen einer partiellen Oxidation gemäß einer bevorzugten Ausführungsform des erfindungsgemäßen Verfahrens.

Der Brenner 100 umfasst einen zentralen Kanal 110, einen ersten ringförmigen Kanal 120 und einen zweiten ringförmigen Kanal 130, wobei der erste ringförmige Kanal 120 den zentralen Kanal 110 konzentrisch umgibt und zu diesem benachbart ist und wobei der zweite ringförmige Kanal 130 den zentralen Kanal und den ersten ringförmigen Kanal 120 konzentrisch umgibt und zu dem ersten ringförmigen Kanal 120 benachbart ist.

Es versteht sich, dass der Brenner 100 auch noch weitere ringförmige Kanäle aufweisen kann, welche den zentralen Kanal 110, den ersten ringförmigen Kanal 120 und den zweiten ringförmigen Kanal 120 konzentrisch umgeben können. Ferner kann der Brenner beispielsweise auch als ein Zweikanalbrenner mit einem zentralen und einem ringförmigen Kanal ausgebildet sein.

Die einzelnen Kanäle 110, 120, 130 werden jeweils durch eine Wand bzw. durch ein jeweiliges Rohr 113, 123, 133 begrenzt. Beispielsweise kann der zentrale Kanal 110 durch ein Rohr 113 gebildet werden, welches in ein den ersten ringförmigen Kanal 120 bildendes Rohr 123 axial eingesetzt werden kann.

Ein Radius des zentralen Kanals 110 bzw. ein innerer Radius des Rohrs 113 entspricht beispielsweise mindestens einem Radius des ersten ringförmigen Kanals 120 bzw. einem innerer Radius des Rohrs 123 dividiert durch den Wert $\sqrt{3}$. Insbesondere kann der Radius des zentralen Kanals 110 bis zu einem Wert gewählt werden, welcher dem Radius des ersten ringförmigen Kanals 120 dividiert durch $\sqrt{5/4}$ entspricht.

In einer Wand 102 des Brenners 100 kann beispielsweise ein Kühlkanal 140 für ein Kühlmittel zum Kühlen des Brenners 100 vorgesehen sein. Ein Kühlfluideinlass 141 kann mit einer Kühlmittelzufuhr verbunden werden, so dass kontinuierlich ein Kühlfluid, z.B. Wasser, von dem Kühlfluideinlass 141 durch den Kühlkanal 140 zu einem Kühlfluidauslass 142 geströmt werden kann. Beispielsweise kann diese Wand 102 des Brenners 100, in welcher der Kühlkanal 140 vorgesehen ist, einer Wand 133 des zweiten ringförmigen Kanals 130 entsprechen.

Es versteht sich, dass für den Brenner 100 auch eine andere Art von Kühlvorrichtung vorgesehen sein kann, beispielsweise eine Kühlwendel usw. Ferner ist es ebenso denkbar, dass es sich um einen ungekühlten Brenner ohne Kühlvorrichtung handelt.

Durch die Kanäle 110, 120, 130 kann jeweils ein Fluid zum Durchführen der partiellen Oxidation geströmt werden. Zu diesem Zweck können die Kanäle 110, 120,130 jeweils über einen entsprechenden Fluideinlass bzw. Fluidanschluss 111, 121, 131 mit einer Fluidzufuhr verbunden werden, so dass jeweils ein entsprechendes Fluid von dem Fluideinlass 111, 121 bzw. 131 zu einem Fluidauslass 112, 122 bzw. 132 in einer Brennerspitze 101 strömen kann. An einem dem Fluidauslass 122 bzw. 132 entgegengesetzten Ende des ersten bzw. zweiten ringförmigen Kanals 120 bzw. 130 ist jeweils beispielsweise ein verschließbarer Flanschanschluss 125, 135 vorgesehen.

Durch diese Fluidauslässe 112, 122 und 132 werden die jeweiligen Fluide aus dem Brenner 100 emittiert, um im Zuge einer partiellen Oxidation ein Synthesegas in Form eines Gemischs aus Kohlenmonoxid und Wasserstoff zu erzeugen. In der kegelstumpfförmigen Brennerspitze 101 kann beispielsweise der zweite ringförmige Kanal 130 unter einem vorgegebenen Neigungs- bzw. Auslasswinkel auf den zentralen Kanal 110 zu verlaufen, so dass das jeweilig Fluid aus dem Fluidauslass 132 unter diesem entsprechenden Neigungs- bzw. Auslasswinkel relativ zu dem Fluidstrom aus dem Fluidauslass 112 des zentralen Kanals 110 emittiert wird.

Der Brenner 100 kann gemäß einer bevorzugten Ausführungsform der vorliegenden Erfindung in einem Teillast-Betriebsmodus von maximal 50% der maximalen Last, ferner von maximal 25%, insbesondere von maximal 10% der maximalen Last betrieben werden.

Zu diesem Zweck wird zwei benachbarten Kanälen der drei Brennerkanäle, also entweder dem zentralen Kanal 110 und dem ersten ringförmigen Kanal 120 oder dem ersten ringförmigen Kanal 120 und dem zweiten ringförmigen Kanal 130, jeweils ein erstes Fluid ausgewählt aus einem Oxidationsmittel oder einem Moderator oder einer Mischung aus dem Moderator und dem Oxidationsmittel zugeführt. Dem verbleibenden dritten Brennerkanal, also entweder dem zweiten ringförmigen Kanal 130 oder dem zentralen Kanal 110, wird ein zweites Fluid aufweisend einen Brennstoff, insbesondere der Brennstoff oder eine Mischung aus dem Brennstoff und dem Moderator, zugeführt.

Durchflussmengen, Durchflussgeschwindigkeit und Zusammensetzungen der durch die einzelnen Kanäle 110, 120, 130 geleiteten Fluide können dabei individuell und separat angepasst werden, wodurch der Teillast-Betrieb bzw. die konkrete Last, unter welcher der Brenner 100 betrieben wird, flexibel eingestellt, angepasst und geregelt werden kann. Beispielsweise werden die Durchflussgeschwindigkeit und die Zusammensetzung des ersten Fluids in den beiden benachbarten Kanälen abhängig voneinander und abhängig von der Last gewählt. Die Zusammensetzung und Durchflussgeschwindigkeit des zweiten Fluids wird insbesondere abhängig von einer prozesstechnisch benötigten Durchflussmenge im Verhältnis zu einer Gesamtsauerstoffmenge gewählt.

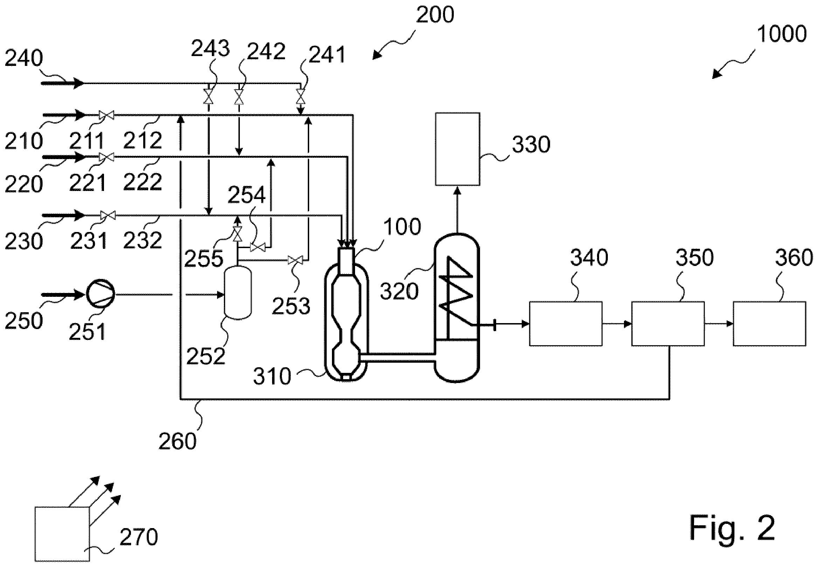

Der Brenner 100 kann neben diesem Teillast-Betriebsmodus ferner in weiteren verschiedenen Betriebsmodi betrieben werden, wobei den einzelnen Kanälen 110, 120, 130 in unterschiedlichen Betriebsmodi jeweils unterschiedliche Fluide zugeführt werden können. Zu diesem Zweck ist eine Zufuhr- und Reguliervorrichtung dazu eingerichtet, abhängig von dem Betriebsmodus, in welchem der Brenner 100 betrieben werden soll, den einzelnen Kanälen 110, 120, 130 des Brenners 100 jeweils betriebsmodusspezifisch wenigstens ein Fluid zuzuführen und abhängig von dem Betriebsmodus Durchflüsse der einzelnen zugeführten Fluide durch die einzelnen Kanäle jeweils betriebsmodusspezifisch zu regulieren. Insbesondere ist diese Zufuhr- und Reguliervorrichtung dazu eingerichtet, die Fluidanschlüsse 111, 121, 131 der einzelnen Kanäle 110, 120, 130 jeweils abhängig von dem Betriebsmodus mit einer oder mehreren Fluidzufuhren zu verbinden, wie nachfolgend in Bezug auf Figur 2 erläutert werden soll.

Figur 2 zeigt schematisch eine bevorzugte Ausgestaltung einer erfindungsgemäßen Vorrichtung 1000 zur partiellen Oxidation aufweisend eine Zufuhr- und Reguliervorrichtung 200 und einen Brenner 100, welcher beispielsweise baugleich oder zumindest im Wesentlichen baugleich zu dem Brenner aus Figur 1 ausgebildet sein kann.

Der Brenner 100 kann beispielsweise in einem Reaktor 310 angeordnet sein. Dem Reaktor 310 kann ein Gaskühler 320 nachgeschaltet sein, um ein von dem Brenner 100 erzeugtes Gas abzukühlen, aus welchem Wasserdampf 330 entnommen werden kann. Dem Gaskühler 320 können ein weiterer Gaskühler 340 sowie eine Abscheidungsvorrichtung 350 nachgeschaltet sein, um $CO_2$ aus dem von dem Brenner 100 erzeugten Gas zu entfernen. Stromabwärts der Abscheidungsvorrichtung 350 wird das von dem Brenner 100 erzeugte Synthesegas in einem Synthesegasbehälter 360 gesammelt oder nachgeschaltetem Prozess direkt verwendet.

Mit Hilfe der Zufuhr- und Reguliervorrichtung 200 können die einzelnen Fluidanschlüsse 111, 121, 131 der Kanäle 110, 120, 130 des Brenners 100 abhängig von dem Betriebsmodus, in welchem der Brenner betrieben werden soll, mit einer oder mehreren Fluidzufuhren 210, 220, 230, 240 verbunden werden.

Eine Brennstoffzufuhr 210 ist zur Zufuhr eines kohlenwasserstoffhaltigen Brennstoffs vorgesehen, z.B. Erdgas, und kann beispielsweise einen entsprechenden Gasbehälter umfassen. Dieser Brennstoffzufuhr 210 sind ein Ventil 211 sowie eine Verbindungsleitung 212 nachgeschaltet, welche je nach Betriebsmodus mit einem Fluidanschluss des Brenners 100 verbunden werden kann.

Eine erste Oxidationsmittelzufuhr 220 und eine zweite Oxidationsmittelzufuhr 230 sind jeweils zur Zufuhr eines Oxidationsmittels vorgesehen, beispielsweise in Form eines sauerstoffhaltigen Gases, z.B. Sauerstoff und/oder Luft. Auch den Oxidationsmittelzufuhren 220, 230 sind jeweils ein Ventil 221, 231 sowie eine Verbindungsleitung 222, 232 nachgeschaltet. Auch diese Verbindungsleitungen 222, 232 können jeweils je nach Betriebsmodus mit einem Fluidanschluss des Brenners 100 verbunden werden.

Eine Moderatorzufuhr 240 ist zur Zufuhr eines Moderators z.B. in der Form von Wasserdampf vorgesehen. Über ein erstes Ventil 241 ist diese Moderatorzufuhr 240 mit der Verbindungsleitung 212 der Brennstoffzufuhr 210 verbindbar. Entsprechend ist die Moderatorzufuhr 240 über ein zweites Ventil 242 mit der Verbindungsleitung 222 der ersten Oxidationsmittelzufuhr 220 verbindbar und über ein drittes Ventil 243 mit der Verbindungsleitung 232 der zweiten Oxidationsmittelzufuhr 230.

Eine Spülfluidzufuhr 250 ist zur Zufuhr eines Spülfluids, z.B. Stickstoff, vorgesehen. Der Spülfluidzufuhr 250 sind eine Pumpe 251 und ein Pufferbehälter 252 nachgeschaltet. Über ein erstes Ventil 253 ist dieser Pufferbehälter 252 mit der Verbindungsleitung 212 der Brennstoffzufuhr 210 verbindbar, über ein zweites Ventil 254 mit der Verbindungsleitung 222 der ersten Oxidationsmittelzufuhr 220 und über ein drittes Ventil 255 mit der Verbindungsleitung 232 der zweiten Oxidationsmittelzufuhr 230.

Über eine Rückführleitung 260 kann $CO_2$ von der Abscheidungsvorrichtung 350 der Verbindungsleitung 212 der Brennstoffzufuhr 210 zugeführt werden.

Eine Steuereinheit 270 ist zum Steuern der Zufuhr- und Reguliervorrichtung 200 vorgesehen. Insbesondere kann diese Steuereinheit 270 ansteuern, welche der Verbindungsleitungen 212, 222, 232 mit welchem Fluidanschluss des Brenners 100 verbunden wird. Ferner kann die Steuereinheit 270 die einzelnen Ventile 211, 221, 231, 241, 242, 243, 253, 254, 255 jeweils individuell ansteuern. Somit kann die Steuereinheit 270 steuern, welche Fluide bzw. Fluidgemische den einzelnen Brennerkanälen 110, 120, 130 zugeführt werden und die Steuereinheit 270 kann die Durchflüsse bzw. Durchflussmengen oder Durchflussgeschwindigkeiten dieser zugeführten Fluidströme regeln.

Insbesondere wird den einzelnen Kanälen 110, 120, 130 des Brenners 100 mit Hilfe der Zufuhr- und Reguliervorrichtung 200 je nach Betriebsmodus nur der Brennstoff oder eine Mischung aus dem Brennstoff und dem Moderator und/oder $CO_2$, nur das Oxidationsmittel oder eine Mischung aus dem Oxidationsmittel und dem Moderator, nur der Moderator oder nur das Spülfluid oder eine Mischung aus dem Spülfluid und dem Moderator zugeführt, wie nachfolgende in Bezug auf die Figuren 1 und 2 erläutert werden soll.

In dem Teillast-Betriebsmodus wird mit Hilfe der Zufuhr- und Reguliervorrichtung 200 beispielsweise dem zentralen Kanal 110 des Brenners 100 der Moderator, insbesondere Wasserdampf, oder eine Mischung aus dem Moderator und dem Oxidationsmittel, insbesondere Sauerstoff, zugeführt, dem ersten ringförmigen Kanal 120 das Oxidationsmittel oder eine Mischung aus dem Oxidationsmittel und dem Moderator und dem zweiten ringförmigen Kanal 130 der Brennstoff oder eine Mischung aus dem Brennstoff und dem Moderator.

Zu diesem Zweck wird mit Hilfe der Zufuhr- und Reguliervorrichtung 200 beispielsweise die Verbindungsleitung 232 der zweiten Oxidationsmittelzufuhr 230 mit dem Fluidanschluss 111 des zentralen Kanals 110 verbunden. Durch entsprechendes Ansteuern des Ventils 231 der zweiten Oxidationsmittelzufuhr 230 und des dritten Ventils 243 der Moderatorzufuhr 240 kann dem zentralen Kanal 110 der Moderator oder die Mischung aus dem Moderator und dem Oxidationsmittel zugeführt werden und die entsprechende Durchflussgeschwindigkeit kann geregelt werden.

Entsprechend wird beispielsweise die Verbindungsleitung 222 der ersten Oxidationsmittelzufuhr 220 mit dem Fluidanschluss 121 des ersten ringförmigen Kanals 120 verbunden. Durch entsprechendes Ansteuern der Ventile 221 und 242 kann dem ersten ringförmigen Kanal 120 das Oxidationsmittel oder die Mischung aus dem Moderator und dem Oxidationsmittel zugeführt werden und der Durchfluss kann geregelt werden.

Die Verbindungsleitung 212 der Brennstoffzufuhr 210 wird mit dem Fluidanschluss 131 des zweiten ringförmigen Kanals 130 verbunden, so dass durch Ansteuern der Ventile 211 und 241 dem zweiten ringförmigen Kanal 130 der Brennstoff oder eine Mischung aus dem Brennstoff und dem Moderator zugeführt und geregelt wird.

Durch den zentralen Kanal 110 wird beispielsweise ein relativ schwacher Strom mit einer geringen Menge an Sauerstoff und Dampf oder nur Dampf geleitet. Durch den ersten ringförmigen Kanal 120 wird Sauerstoff oder ein Sauerstoff-Dampf-Gemisch mit einer gleichen Durchflussmenge wie in einem Volllast-Betriebsmodus geleitet oder mit einer geringfügig reduzierten Durchflussmenge gegenüber dem Volllast-Betriebsmodus. Durch den zweiten ringförmigen Kanal 130 wird der Brennstoff oder das Brennstoff-Dampf-Gemisch geleitet, mit einer gleichen Durchflussmenge wie in dem Volllast-Betriebsmodus. Insbesondere wird der Brenner 100 in dem Teillast-Betriebsmodus mit maximal 50% der maximalen Last betrieben.

Alternativ wird in dem Teillast-Betriebsmodus mit Hilfe der Zufuhr- und Reguliervorrichtung 200 beispielsweise dem zentralen Kanal 110 des Brenners 100 der Brennstoff oder eine Brennstoff-Dampf-Mischung zugeführt, insbesondere mit einer gleichen Durchflussmenge wie in dem Volllast-Betriebsmodus. Dem ersten ringförmigen Kanal 120 wird das Oxidationsmittel oder eine Mischung aus dem Oxidationsmittel und dem Moderator zugeführt, insbesondere Sauerstoff oder ein Sauerstoff-Dampf-Gemisch mit einer gleichen Durchflussmenge wie in dem Volllast-Betriebsmodus oder mit einer geringfügig reduzierten Durchflussmenge gegenüber dem Volllast-Betriebsmodus. Dem zweiten ringförmigen Kanal 130 wird der Moderator und/oder Oxidationsmittel zugeführt, insbesondere ein relativ schwacher Strom mit einer geringen Menge an Sauerstoff und Dampf oder nur Dampf.

Zu diesem Zweck wird mit Hilfe der Zufuhr- und Reguliervorrichtung 200 die Verbindungsleitung 212 der Brennstoffzufuhr 210 wird mit dem Fluidanschluss 111 des zentralen Kanals 110 verbunden, so dass durch Ansteuern der Ventile 211 und 241 dem zentralen Kanal 110 der Brennstoff oder eine Mischung aus dem Brennstoff und dem Moderator zugeführt und geregelt wird. Beispielsweise wird die Verbindungsleitung 222 der ersten Oxidationsmittelzufuhr 220 mit dem Fluidanschluss 121 des ersten ringförmigen Kanals 120 verbunden. Durch entsprechendes Ansteuern der Ventile 221 und 242 kann dem ersten ringförmigen Kanal 120 das Oxidationsmittel oder die Mischung aus dem Moderator und dem Oxidationsmittel zugeführt werden und der Durchfluss kann geregelt werden. Ferner wird beispielsweise die Verbindungsleitung 232 der zweiten Oxidationsmittelzufuhr 230 mit dem Fluidanschluss 131 des zweiten ringförmigen Kanals 130 verbunden. Durch entsprechendes Ansteuern des Ventils 231 der zweiten Oxidationsmittelzufuhr 230 und des dritten Ventils 243 der Moderatorzufuhr 240 kann dem zweiten ringförmigen Kanal 130 der Moderator oder die Mischung aus dem Moderator und dem Oxidationsmittel zugeführt werden und die entsprechende Durchflussgeschwindigkeit kann geregelt werden.

In einem Spül-Betriebsmodus werden mit Hilfe der Zufuhr- und Reguliervorrichtung 200 dem zentralen Kanal 110, dem ersten ringförmigen Kanal 120 und dem zweiten ringförmigen Kanal 130 jeweils der Moderator, insbesondere Wasserdampf, oder das Spülfluid, insbesondere Stickstoff, oder eine Mischung aus dem Moderator und dem Spülfluid zugeführt. Zu diesem Zweck wird beispielsweise die Verbindungsleitung 232 der zweiten Oxidationsmittelzufuhr 230 mit dem Fluidanschluss 111 des zentralen Kanals 110 verbunden, die Verbindungsleitung 222 der ersten Oxidationsmittelzufuhr 220 mit dem Fluidanschluss 121 des ersten ringförmigen Kanals 120 und die Verbindungsleitung 212 der Brennstoffzufuhr 210 mit dem Fluidanschluss 131 des zweiten ringförmigen Kanals 130. Die Ventile 211, 221 und 231 der Brennstoff- und Oxidationsmittelzufuhren 210, 220, 230 werden geschlossen und die Ventile 241, 242, 243 der Moderatorzufuhr 240 sowie die Ventile 253, 254, 255 der Spülfluidzufuhr 250 werden entsprechend geöffnet, um den Brennerkanäle 110, 120, 130 entsprechende Mengen an Wasserdampf und/oder Stickstoff zuzuführen. In diesem Spül-Betriebsmodus werden die Brennerkanäle 110, 120, 130 mit Wasserdampf und/oder einem Hochdruck-Stickstoff-Strom gespült, um einen Rückfluss von heißem Synthesegas in den Brenner 100 zu verhindern. Insbesondere wird der Spül-Betriebsmodus bei einem Fehler oder einer Störung durchgeführt und so lange durchgeführt, bis ein Druck aus dem Reaktor 310 vollständig abgelassen bzw. abgebaut ist oder eine Wiederaufnahme des Normalbetriebes eingeleitet wird.

In einem Bereitschafts- bzw. Standby-Betriebsmodus sowie in einem Aufheiz- bzw. Heat-Up-Betriebsmodus werden dem zentralen Kanal 110 der Brennstoff oder eine Mischung aus dem Brennstoff und dem Moderator zugeführt, dem ersten ringförmigen Kanal 120 das Oxidationsmittel, vorzugsweise Luft, und dem zweiten ringförmigen Kanal 130 das Oxidationsmittel oder der Moderator oder eine Mischung aus dem Oxidationsmittel und dem Moderator. Zu diesem Zweck wird die Verbindungsleitung 212 der Brennstoffzufuhr mit dem Fluidanschluss 111 des zentralen Kanals 110 verbunden. Durch Ansteuern der Ventile 211 und 241 wird dem zentralen Kanal der Brennstoff oder die Brennstoff-Moderator-Mischung zugeführt und der Durchfluss entsprechend geregelt. Ferner wird beispielsweise die Leitung 222 der ersten Oxidationsmittelzufuhr 220 mit dem Anschluss 121 des ersten ringförmigen Kanal 120 verbunden und die Verbindungsleitung 232 der zweiten Oxidationsmittelzufuhr 230 wird z.B. mit dem Anschluss 131 des zweiten ringförmigen Kanal 130 verbunden. Durch Ansteuern der Ventile 231 und 243 kann dem zweiten ringförmigen Kanal 130 somit das Oxidationsmittel und/oder der Moderator zugeführt werden.

Alternativ kann in dem Bereitschafts- sowie dem Aufheiz-Betriebsmodus auch dem zentralen Kanal 110 das Oxidationsmittel, vorzugsweise Luft, zugeführt werden, dem ersten ringförmigen Kanal 120 der Brennstoff oder eine Mischung aus dem Brennstoff und dem Moderator und dem zweiten ringförmigen Kanal 130 das Oxidationsmittel oder der Moderator oder eine Mischung aus dem Oxidationsmittel und dem Moderator.

In diesem Fall wird beispielsweise die Verbindungsleitung 222 der ersten Oxidationsmittelzufuhr 220 mit dem Fluidanschluss 111 des zentralen Kanals 110 verbunden und die Verbindungsleitung 212 der Brennstoffzufuhr 210 mit dem Fluidanschluss 121 des ersten ringförmigen Kanal 120. Die Verbindungsleitung 232 der zweiten Oxidationsmittelzufuhr 230 wird z.B. mit dem Fluidanschluss 131 des zweiten ringförmigen Kanal 130 verbunden. Insbesondere kann somit zwischen einer Diffusionsflamme und einer inversen Diffusionsflamme gewechselt werden.

In einem Abschalt-Betriebsmodus bzw. Turn-Down wird mit Hilfe der Zufuhr- und Reguliervorrichtung 200 dem zentralen Kanal 110 das Oxidationsmittel, insbesondere Sauerstoff, oder eine Mischung aus dem Oxidationsmittel und dem Moderator zugeführt, dem ersten ringförmigen Kanal 120 der Moderator, insbesondere Wasserdampf, und dem zweiten ringförmigen Kanal 130 der Brennstoff oder eine Mischung aus dem Brennstoff und dem Moderator. Zu diesem Zweck wird beispielsweise die Verbindungsleitung 222 der ersten Oxidationsmittelzufuhr 220 mit dem Fluidanschluss 111 des zentralen Kanals 110 verbunden. Durch Ansteuern der Ventile 221 und 242 wird dem zentralen Kanal 110 Sauerstoff oder ein Sauerstoff-Dampf-gemisch zugeführt und geregelt. Die Verbindungsleitung 232 der zweiten Oxidationsmittelzufuhr 230 wird beispielsweise mit dem Fluidanschluss 121 des ersten ringförmigen Kanals 120 verbunden. Das Ventil 231 der zweiten Oxidationsmittelzufuhr 230 wird geschlossen und das dritte Ventil 243 der Moderatorzufuhr 240 wird entsprechend angesteuert, um Dampf durch den ersten ringförmigen Kanal 120 zu leiten und um dessen Durchfluss zu regeln. Die Verbindungsleitung 212 der Brennstoffzufuhr 210 wird mit dem Fluidanschluss 131 des zweiten ringförmigen Kanals 130 verbunden und die Ventile 211 und 241 werden angesteuert, um diesem Kanal 130 Brennstoff oder ein Brennstoff-Dampf-Gemisch zuzuführen, beispielsweise mit reduzierter Durchfluss- bzw. Austrittsgeschwindigkeit. Zweckmäßigerweise wird dem ersten ringförmigen Kanal 120 somit Dampf zur Abschirmung zugeführt und dem zentralen Kanal 110 das Oxidationsmittel mit oder ohne Dampf mit einer angepassten Durchflussmenge, um zu verhindern, dass sich durch die reduzierte Austrittsgeschwindigkeit aus dem zweiten ringförmigen Kanal 130 die Gefahr des Rückbrennens erhöht.

Durch die vorliegende Vorrichtung 1000 kann somit individuell gewechselt werden, welche Fluide durch welche Brennerkanäle 110, 120, 130 mit welchen Durchflussmengen geleitet werden. Der Brenner 100 kann flexibel in Teillast sowie in weiteren unterschiedlichen Betriebsmodi betrieben werden und es kann während des Betriebs des Brenners 100 flexibel zwischen den einzelnen Betriebsmodi gewechselt werden. Somit bedarf es nicht verschiedener Brenner für verschiedene Betriebsmodi, sondern ein Brenner kann je nach Bedarf flexibel in unterschiedlichen Betriebsmodi und in unterschiedlichen Lastbereichen betrieben werden.

**Bezugszeichenliste**

| | |
|---|---|
| 100 | Brenner |
| 101 | Brennerspitze |
| 102 | Wand des Brenners |
| 110 | zentraler Kanal |
| 111 | Fluideinlass |
| 112 | Fluidauslass |
| 113 | Wand bzw. Rohr des zentralen Kanals |
| 120 | erster ringförmiger Kanal |
| 121 | Fluideinlass |
| 122 | Fluidauslass |
| 123 | Wand bzw. Rohr des ringförmigen Kanals |
| 125 | Flanschanschluss |
| 130 | zweiter ringförmiger Kanal |
| 131 | Fluideinlass |
| 132 | Fluidauslass |
| 133 | Wand bzw. Rohr des Brenners |
| 135 | Flanschanschluss |
| 140 | Kühlkanal |
| 141 | Kühlfluideinlass |
| 142 | Kühlfluidauslass |
| 200 | Zufuhr- und Reguliervorrichtung |
| 210 | Brennstoffzufuhr |
| 211 | Ventil |
| 212 | Verbindungsleitung |
| 220 | erste Oxidationsmittelzufuhr |
| 221 | Ventil |
| 222 | Verbindungsleitung |
| 230 | zweite Oxidationsmittelzufuhr |
| 231 | Ventil |
| 232 | Verbindungsleitung |
| 240 | Moderatorzufuhr |
| 241 | Ventil |
| 242 | Ventil |
| 243 | Ventil |
| 250 | Spülfluidzufuhr |
| 251 | Pumpe |
| 252 | Pufferbehälter |
| 253 | Ventil |
| 254 | Ventil |
| 255 | Ventil |
| 260 | $CO_2$ Rückführleitung |
| 270 | Steuereinheit |
| 310 | Reaktor |
| 320 | Gaskühler |
| 330 | Wasserdampf |
| 340 | Gaskühler |
| 350 | Abscheidungsvorrichtung |
| 360 | Synthesegasbehälter |
| 1000 | Vorrichtung zur partiellen Oxidation |

**Patentansprüche**

1. Verfahren zum Betreiben eines Brenners (100) zum Durchführen einer partiellen Oxidation,

wobei der Brenner (100) einen zentralen Kanal (110), einen ersten ringförmigen Kanal (120) und einen zweiten ringförmigen Kanal (130) aufweist, wobei der erste ringförmige Kanal (120) zu dem zentralen Kanal (110) benachbart ist und diesen umgibt und wobei der zweite ringförmige Kanal (130) zu dem ersten ringförmigen Kanal (120) benachbart ist und diesen umgibt, wobei in einem Teillast-Betriebsmodus zwei benachbarten Kanälen dieser drei Kanäle (110, 120, 130) des Brenners (100) jeweils ein erstes Fluid ausgewählt aus einem Oxidationsmittel oder einem Moderator oder einer Mischung aus dem Moderator und dem Oxidationsmittel zugeführt wird und wobei dem dritten Kanal dieser drei Kanäle (110, 120, 130) des Brenners (100) ein zweites Fluid aufweisend einen Brennstoff, insbesondere der Brennstoff oder eine Mischung aus dem Brennstoff und dem Moderator, zugeführt wird.

2. Verfahren nach Anspruch 1, wobei einem der zwei benachbarten Kanäle das jeweilige erste Fluid mit einer höheren Durchflussgeschwindigkeit zugeführt wird als dem anderen der zwei benachbarten Kanäle, insbesondere jeweils abhängig von der Last.

3. Verfahren nach Anspruch 1 oder 2, wobei den zwei benachbarten Kanälen das erste Fluid jeweils mit einer unterschiedlichen Zusammensetzung zugeführt wird, insbesondere jeweils abhängig von der Last.

4. Verfahren nach einem der vorstehenden Ansprüche, wobei der Brenner (100) in dem Teillast-Betriebsmodus bis maximal 50% der maximalen Last betrieben wird, bevorzugt bis maximal 25%, bevorzugt bis maximal 10%.

5. Verfahren nach einem der vorstehenden Ansprüche, wobei in dem Teillast-Betriebsmodus

   dem zentralen Kanal (110) des Brenners (100) als das erste Fluid das Oxidationsmittel oder der Moderator oder eine Mischung aus dem Moderator und dem Oxidationsmittel zugeführt wird, dem ersten ringförmigen Kanal (120) des Brenners (100) als das erste Fluid das Oxidationsmittel oder der Moderator oder eine Mischung aus dem Oxidationsmittel und dem Moderator zugeführt wird und dem zweiten ringförmigen Kanal (130) des Brenners (100) als das zweite Fluid der Brennstoff oder eine Mischung aus dem Brennstoff und dem Moderator zugeführt.

6. Verfahren nach Anspruch 5, wobei dem ersten ringförmigen Kanal (120) des Brenners (100) das jeweilige erste Fluid mit höherer Durchflussgeschwindigkeit zugeführt wird als dem zentralen Kanal (110) des Brenners (100), insbesondere jeweils abhängig von der Last.

7. Verfahren nach einem der Ansprüche 1 bis 4, wobei in dem Teillast-Betriebsmodus

   dem zentralen Kanal (110) des Brenners (100) als das zweite Fluid der Brennstoff oder eine Mischung aus dem Brennstoff und dem Moderator zugeführt wird, dem ersten ringförmigen Kanal (120) des Brenners (100) als das erste Fluid das Oxidationsmittel oder der Moderator oder eine Mischung aus dem Oxidationsmittel und dem Moderator zugeführt wird und dem zweiten ringförmigen Kanal (130) des Brenners (100) als das erste Fluid das Oxidationsmittel oder der Moderator oder eine Mischung aus dem Moderator und dem Oxidationsmittel zugeführt wird.

8. Verfahren nach Anspruch 7, wobei dem ersten ringförmigen Kanal (120) des Brenners (100) das jeweilige erste Fluid mit höherer Durchflussgeschwindigkeit zugeführt wird als dem zweiten ringförmigen Kanal (130) des Brenners (100), insbesondere jeweils abhängig von der Last.

9. Verfahren nach einem der vorstehenden Ansprüche, wobei ein Radius des zentralen Kanals (110) mindestens einem Radius des ersten ringförmigen Kanals (120) dividiert durch $\sqrt{3}$ entspricht, insbesondere mindestens dem Radius des ersten ringförmigen Kanals (120) dividiert durch V2, insbesondere maximal dem Radius des ersten ringförmigen Kanals (120) dividiert durch $\sqrt{5/4}$.

10. Verfahren nach einem der vorstehenden Ansprüche, wobei eine Zufuhr- und Reguliervorrichtung (200) vorgesehen ist, um den Brenner in wenigstens einem weiteren Betriebsmodus zu betreiben,

    wobei mit Hilfe der Zufuhr- und Reguliervorrichtung (200) abhängig von einem Betriebsmodus den einzelnen Kanälen (110, 120, 130) des Brenners (100) jeweils betriebsmodusspezifisch wenigstens ein Fluid zugeführt wird, insbesondere jeweils ausgewählt aus dem Brennstoff, dem Oxidationsmittel, dem Moderator und ferner insbesondere einem Spülfluid, und wobei mit Hilfe der Zufuhr- und Reguliervorrichtung (200) abhängig von dem Betriebsmodus Durchflüsse der einzelnen zugeführten Fluide durch die einzelnen Kanäle (110, 120, 130) jeweils betriebsmodusspezifisch reguliert werden.

11. Verfahren nach Anspruch 10, wobei in einem Spül-Betriebsmodus mit Hilfe der Zufuhr- und Reguliervorrichtung (200)

    dem zentralen Kanal (110) des Brenners (100) der Moderator oder das Spülfluid oder eine Mischung aus dem Moderator und dem Spülfluid zugeführt wird,

dem ersten ringförmigen Kanal (120) des Brenners (100) der Moderator oder das Spülfluid oder eine Mischung aus dem Moderator und dem Spülfluid zugeführt wird und

dem zweiten ringförmigen Kanal (130) des Brenners (100) der Moderator oder das Spülfluid oder eine Mischung aus dem Moderator und dem Spülfluid zugeführt wird.

12. Verfahren nach Anspruch 10 oder 11, wobei in einem Bereitschafts-Betriebsmodus und/oder in einem Aufheiz-Betriebsmodus mit Hilfe der Zufuhr- und Reguliervorrichtung (200)

dem zentralen Kanal (110) des Brenners (100) der Brennstoff oder eine Mischung aus dem Brennstoff und dem Moderator zugeführt wird, dem ersten ringförmigen Kanal (120) des Brenners (100) das Oxidationsmittel, vorzugsweise Luft, zugeführt wird, dem zweiten ringförmigen Kanal (130) des Brenners (100) das Oxidationsmittel oder der Moderator oder eine Mischung aus dem Oxidationsmittel und dem Moderator zugeführt wird, oder

wobei in dem Bereitschafts-Betriebsmodus und/oder in dem Aufheiz-Betriebsmodus mit Hilfe der Zufuhr- und Reguliervorrichtung (200)

dem zentralen Kanal (110) des Brenners (100) das Oxidationsmittel, vorzugsweise Luft, zugeführt wird, dem ersten ringförmigen Kanal (120) des Brenners (100) der Brennstoff oder eine Mischung aus dem Brennstoff und dem Moderator zugeführt wird, dem zweiten ringförmigen Kanal (130) des Brenners (100) das Oxidationsmittel oder der Moderator oder eine Mischung aus dem Oxidationsmittel und dem Moderator zugeführt wird.

13. Verfahren nach einem der Ansprüche 10 bis 12, wobei in einem Abschalt-Betriebsmodus mit Hilfe der Zufuhr- und Reguliervorrichtung (200)

dem zentralen Kanal (110) des Brenners (100) das Oxidationsmittel oder eine Mischung aus dem Oxidationsmittel und dem Moderator zugeführt wird, dem ersten ringförmigen Kanal (120) des Brenners (100) der Moderator zugeführt wird, dem zweiten ringförmigen Kanal (130) des Brenners (100) der Brennstoff oder eine Mischung aus dem Brennstoff und dem Moderator zugeführt wird.

14. Verfahren nach einem der Ansprüche 10 bis 13, wobei mit Hilfe der Zufuhr- und Reguliervorrichtung (200) dem zugeführten Brennstoff oder der zugeführten Mischung aus dem Brennstoff und dem Moderator abhängig von dem Betriebsmodus $CO_2$ zugeführt wird, insbesondere von einer dem Brenner (100) nachgeschalteten Abscheidungsvorrichtung (350) zum Entfernen von $CO_2$ aus einem von dem Brenner (100) erzeugten Gas, und ein Durchfluss des zugeführten $CO_2$ abhängig von dem Betriebsmodus reguliert wird.

15. Vorrichtung (1000) zum Durchführen einer partiellen Oxidation, aufweisend einen Brenner (100) mit einem zentralen Kanal (110), einem ersten ringförmigen Kanal (120) und einem zweiten ringförmigen Kanal (130), wobei der erste ringförmige Kanal (120) zu dem zentralen Kanal (110) benachbart ist und diesen umgibt und wobei der zweite ringförmige Kanal (130) zu dem ersten ringförmigen Kanal (120) benachbart ist und diesen umgibt, wobei die Vorrichtung (1000) dazu eingerichtet ist, ein Verfahren nach einem der vorstehenden Ansprüche durchzuführen.

16. Vorrichtung (1000) nach Anspruch 15, ferner aufweisend eine Zufuhr- und Reguliervorrichtung (200), die dazu eingerichtet ist, abhängig von einem Betriebsmodus den einzelnen Kanälen (110, 120, 130) des Brenners (100) jeweils betriebsmodusspezifisch wenigstens ein Fluid zuzuführen, insbesondere jeweils ausgewählt aus einem Brennstoff, einem Oxidationsmittel, einem Moderator und ferner insbesondere einem Spülfluid, und abhängig von dem Betriebsmodus Durchflüsse der einzelnen zugeführten Fluide durch die einzelnen Kanäle (110, 120, 130) jeweils betriebsmodusspezifisch zu regulieren.

Fig. 1

Fig. 2

EP 4 163 546 A1

**EUROPÄISCHER RECHERCHENBERICHT**

Europäisches Patentamt
European Patent Office
Office européen des brevets

Nummer der Anmeldung

**EP 21 02 0498**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 525 175 A (STELLACCIO ROBERT J [US]) 25. Juni 1985 (1985-06-25)<br><br>* Spalte 2, Zeile 31 – Spalte 9, Zeile 66; Abbildung *<br>----- | 1,2,4, 7-12,15, 16 | INV.<br>F23D14/22<br>C01B3/36 |
| X | WO 2011/085744 A1 (LURGI GMBH [DE]; MUELLER-HAGEDORN MATTHIAS [DE] ET AL.) 21. Juli 2011 (2011-07-21)<br>* Seite 6, Zeile 16 – Seite 11, Zeile 17; Abbildung *<br>----- | 1-3,5,6, 9-11,13, 15,16 | |
| X | DE 23 09 821 A1 (TEXACO DEVELOPMENT CORP) 12. September 1974 (1974-09-12)<br><br>* Seite 7 – Seite 26; Abbildung *<br>----- | 1-3, 7-12,15, 16 | |
| X | GB 1 413 996 A (TEXACO DEVELOPMENT CORP) 12. November 1975 (1975-11-12)<br><br>* Seite 2, Zeile 10 – Seite 6, Zeile 31; Abbildungen 1-3 *<br>----- | 1-3,5, 9-11, 13-16 | |

RECHERCHIERTE SACHGEBIETE (IPC)

F23D
C01C
C01B

Der vorliegende Recherchenbericht wurde für alle Patentansprüche erstellt

| Recherchenort | Abschlußdatum der Recherche | Prüfer |
|---|---|---|
| **München** | **8. März 2022** | **Theis, Gilbert** |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 02 0498

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2022

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 4525175 | A | 25-06-1985 | KEINE | | | |
| WO | 2011085744 | A1 | 21-07-2011 | BR | 112012017482 | A2 | 29-03-2016 |
| | | | | CA | 2786642 | A1 | 21-07-2011 |
| | | | | CN | 102712468 | A | 03-10-2012 |
| | | | | DE | 102010004787 | A1 | 21-07-2011 |
| | | | | EP | 2523899 | A1 | 21-11-2012 |
| | | | | TW | 201139944 | A | 16-11-2011 |
| | | | | US | 2012298922 | A1 | 29-11-2012 |
| | | | | US | 2014227647 | A1 | 14-08-2014 |
| | | | | WO | 2011085744 | A1 | 21-07-2011 |
| DE | 2309821 | A1 | 12-09-1974 | KEINE | | | |
| GB | 1413996 | A | 12-11-1975 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4888031 A

- US 3255966 A